# EUROPÄISCHE PATENTSCHRIFT

(11) **EP 0 886 798 B1**
(45) Veröffentlichungstag und Bekanntmachung des Hinweises auf die Patenterteilung: **12.12.2001**
(21) Anmeldenummer: 97902139.1
(22) Anmeldetag: 18.02.1997
(51) Int. Cl.: G02B 6/38

(54) **Vorrichtung für die paarweise Verbindung von Lichtwellenleiterkabeln mit einer Vielzahl von parallel angeordneten Lichtwellenleitern**
Device for connection in pairs of optical fibre cables with a plurality of parallelly arranged optical fibres
Dispositif de connexion par paires de cables à fibres optiques avec une pluralité de fibres optiques disposées en parallele

(30) Priorität: 12.03.1996 CH 64596
(43) Veröffentlichungstag der Anmeldung: 30.12.1998
(60) Teilanmeldung: 00104729.9
(73) Patentinhaber: Diamond SA, 6616 Losone (CH)
(72) Erfinder: DE MARCHI, Silverio, 6646 Contra (CH); KRAUSSE, Peter, D-85609 Aschheim (DE); MARAZZI, Silvio, 6654 Cavigliano (CH)
(74) Vertreter: Wenger, René
(86) Internationale Anmeldenummer: CH9700056
(87) Internationale Veröffentlichungsnummer: WO9734176

(56) Entgegenhaltungen:
- EP-A- 0 008 980
- EP-A- 0 375 168
- EP-A- 0 485 196
- EP-A- 0 490 698
- EP-A- 0 505 197
- EP-A- 0 514 722
- US-A- 5 028 112

## Beschreibung

Die Erfindung betrifft eine Vorrichtung für die paarweise Verbindung von Lichtwellenleiterkabeln mit einer Mehrzahl von parallel angeordneten Lichtwellenleitern gemäss dem Oberbegriff von Anspruch 1. Derartige Steckverbindungen werden für Bandkabel eingesetzt, in denen parallel nebeneinander mehrere Lichtwellenleiter eingeschlossen sind. In der Praxis werden die dabei verwendeten Steckverbinder als MT-Stecker bezeichnet, wobei sich bestimmte Parameter bereits als Norm durchgesetzt haben.

Die am Kabelendstück fixierten Lichtwellenleiterenden werden zwischen zwei benachbarten Steckverbindern unmittelbar aufeinander zentriert (plug to plug Zentrierung). Als Passmittel zur gegenseitigen Ausrichtung dienen dabei Passstifte, die jedoch keine andere Funktion haben, als zwei Steckverbinder exakt aufeinander auszurichten, so dass die Stirnseiten der Lichtwellenleiter exakt aufeinander passen und möglichst keine Dämpfungsverluste eintreten. Gattungsmässig vergleichbare Steckverbinder sind beispielsweise durch die EP-A 485196 oder durch die EP-A 490698 bekannt geworden.

Durch die EP-A 514722 ist ebenfalls ein gattungsmässig vergleichbarer Steckverbinder für Mehrfaserkabel bekannt geworden, bei dem das Kabelendstück unter der Vorspannung einer Schraubendruckfeder gehalten ist. Die Führung des Kabelendstücks erfolgt dabei ausschliesslich durch einen Gehäuseabschnitt. Die EP-A 8980 zeigt einen vergleichbaren Steckverbinder, bei dem das Kabelendstück mit Hilfe von zwei Montagebolzen mit einem Kabelsockelstück verbunden ist. Eine Federung zwischen Kabelendstück und Sockelstück ist jedoch nicht vorgesehen.

Ein Problem bei vergleichbaren Steckverbindern besteht darin, dass die Stirnseiten unter einer bestimmten Federvorspannung gegeneinander gepresst werden müssen, um einen Luftspalt und damit Dämpfungsverluste zu vermeiden. Bei konventionellen Steckern wird dies beispielsweise mit einer Federklammer erreicht (z.B. EP-A 490698 Fig. 5 oder EP-A 514722 Fig. 24), welche die beiden Kabelendstücke überspannt und gegeneinander presst. Die Federklammer bildet dabei jedoch ein separates Bauteil, das Platz beansprucht und das zudem verlorengehen kann. Für Einschub-Steckverbindungen also z.B. zwischen einer Leiterplatte und einer Rückwand, sind derartige Federklammern ohnehin ungeeignet, da normalerweise einer der beiden Steckverbinder eines Verbinderpaars in eine Gehäusewand integriert ist und daher für die Federklammer nicht zugänglich ist.

In der EP-A 485 196 wird für eine Einschub-Steckverbindung vorgeschlagen, wenigstens einen Steckverbinder in einem federnd aufgehängten Block zu lagern. Diese Art der Lagerung beansprucht jedoch sehr viel Platz und ist für eine hohe Packungsdichte nicht geeignet. Ausserdem ist dabei das Kabelendstück richtungsmässig nicht exakt orientiert.

Durch die EP-A 505197 ist eine Einschubsteckverbindung bekannt geworden, bei der die Steckverbinder in der einen Steckverbinderaufnahme fest montiert sind, während die Steckverbinder in der gegenüberliegenden Steckverbinderaufnahme verschiebbar gelagert sind und unter Federvorspannung stehen. Dabei bildet aber die Steckverbinderaufnahme selbst das Führungselement für die verschiebbaren Steckverbinder, was aus herstellungstechnischen und montagetechnischen Gründen nicht zweckmässig ist.

Es ist daher eine Aufgabe der Erfindung, eine Steckverbindung der Eingangs genannten Art zu schaffen, die sich insbesondere als Einschubsteckverbindung mit hoher Packungsdichte eignet und die einfach zu handhaben ist. Dabei soll für die Steckverbinder insbesondere auch auf kleinstem Raum eine richtungsmässig exakt geführte Federbewegung des Kabelendstücks ermöglicht werden.

Die Aufgabe wird erfindungsgemäss mit einer Vorrichtung gelöst, welche die Merkmale im Anspruch 1 aufweist.

Jeder Steckverbinder weist dabei ein Gehäuse auf, in dem das Kabelendstück unter Federvorspannung gehalten ist. Gleichzeitig ist jeder Steckverbinder an diesem Gehäuse lösbar in eine Steckverbinderaufnahme eingerastet und die Steckverbinderaufnahmen sind gerätewandseitig und baugruppenseitig mit Führungselementen zum gegenseitigen Ausrichten der gefederten Kabelendstücke versehen. Die lösbare Anordnung einzelner Steckverbinder in den Steckverbinderaufnahmen hat den Vorteil, dass zu Reparaturzwecken oder zu Messzwecken die Verbinder auf einfache Weise herausgelöst werden können. Besonders bei Steckverbindungen mit mehreren Verbinderpaaren ist dies günstig, weil die Relativlage der übrigen Verbinder beim Herauslösen eines einzelnen Verbinders nicht verändert werden muss.

Eine einfache Fixierung der Steckverbinder in einer Steckverbinderaufnahme kann erreicht werden, wenn an jedem Gehäuse wenigstens ein federndes, gegen die Ebene der Gehäusewand pressbares Rastelement angeordnet ist und wenn der Verbinder an der Steckverbinderaufnahme zwischen einem über die Gehäusewand hinausragenden Anschlag und dem Rastelement einrastbar ist. Zum Lösen eines Steckverbinders braucht lediglich das Rastelement mit einem Schraubenzieher oder mit einem anderen geeigneten Werkzeug eingedrückt zu werden.

Das als Widerlager für das gefederte Kabelendstück dienende Sockelstück kann im Gehäuse fest eingespannt sein und es kann den durch eine Gehäuseöffnung ragenden Anschlag tragen. Selbstverständlich wäre es aber auch denkbar, den Anschlag einstückig mit der Gehäusewand auszubilden.

Eine besonders einfache Handhabung der Einschub-Steckverbindung wird erreicht, wenn die Führungselemente an der rückwandseitigen Steckverbinderaufnahme ein Paar seitliche Führungsflügel aufweisen, welche in korrespondierende Führungsnuten an der baugruppenseitigen Steckverbinderaufnahme eingreifen. Die Führungsflügel können dabei so geformt sein, dass sie zunächst eine Grobzentrierung der baugruppenseitigen Steckverbinderaufnahme bewirken, wobei letztere mit sich verringender Einschubdistanz immer genauer zentriert wird, bis die Pass-stifte der einzelnen Verbinder in die komplementären Bohrungen am Gegenstück eingreifen.

Besonders vorteilhaft werden für die Steckverbindung einzelne Steckverbinder mit Passmitteln an der Stirnseite zum Ausrichten des Kupplungsabschnitts auf den Kupplungsabschnitt eines einschliessbaren Verbindergegenstücks mit komplementären Passmitteln eingesetzt. Das Kabelendstück ist dabei an zwei Führungsstiften geführt, welche in einem Sockelstück gehalten sind und welche in korrespondierende Bohrungen im Kabelendstück eingreifen. Die Federvorspannung wird dadurch erreicht, dass zwischen dem Sockelstück und dem Kabelendstück wenigstens eine Druckfeder angeordnet ist.

Die beiden im Sockelstück gehaltenen Führungsstifte, welche in die korrespondierenden Bohrungen im Kabelendstück eingreifen, bewirken eine geradlinige und verkanntungsfreie Führung des Kabelendstücks. Das Sockelstück dient dabei gleichzeitig als Widerlager für die Druckfeder, welche das Kabelendstück in Einsteckrichtung vorspannt. Diese Führung und Federung des Kabelendstücks ermöglicht es, ohne äussere Federklammer einen stets gleichbleibenden Anpress-druck an den Stirnseiten benachbarter Steckverbinder aufrechtzuerhalten und zwar unabhängig davon, auf welche Weise die Steckverbinder zusammengehalten werden. Die Steckverbinder können wie bei einer Einschubsteckverbindung lediglich durch Reibungskräfte zusammenhalten werden, sie können mittels einer lösbaren Schnappverbindung zusammengefügt werden oder sie können bei extremen Zugbelastungen oder Sicherheitsanforderungen auch miteinander verschraubt werden.

Vorzugsweise ist zwischen dem Sockelstück und dem Kabelendstück auf jedem Führungsstift je eine Schraubendruckfeder gehalten. Der Führungsstift übernimmt dabei ersichtlicherweise auch noch die Funktion einer Federhalterung. Selbstverständlich könnten die Druckfedern aber auch anderweitig gelagert sein und es muss sich nicht zwingend um Schraubendruckfedern handeln.

Ein besonders kompakter Steckverbinder ergibt sich, wenn das Sockelstück und das Kabelendstück in einem Gehäuse gehalten sind und wenn das Gehäuse dabei gleichzeitig einen Anschlag bildet, gegen den das Kabelendstück unter Federvorspannung gepresst wird. Das Gehäuse schützt die Führung und Federung des Kabelendstücks und bildet gleichzeitig eine Begrenzung für das Kabelendstück im unbelasteten Zustand. Es ist dabei zweckmässig, wenn das Sockelstück fest im Gehäuse eingespannt ist.

Eine einfache Bauweise und eine leichte Montage kann erreicht werden, wenn das Gehäuse aus zwei Gehäuseschalen besteht, welche über das Sockelstück bzw. über das Kabelendstück schnappbar sind.

Die Führungsbohrungen im Kabelendstück können ausschliesslich dazu dienen, die Führungsstifte aufzunehmen. Besonders vorteilhaft ist es jedoch, wenn die Bohrungen das Kabelendstück bis zur Stirnseite durchdringen und wenn die Führungsstifte nur einen Teil der Länge der Bohrungen beanspruchen, wobei die im Bereich der Stirnseite verbleibenden freien Abschnitte der Bohrungen das Passmittel zur Aufnahme komplementärer Passstifte eines Verbindergegenstücks bilden. Die gleichen Bohrungen dienen somit im rückwärtigen Bereich zur Aufnahme der Führungsstifte und im stirnseitigen Bereich zur Aufnahme der Passstifte eines Verbindergegenstücks. Dies ist nicht nur aus fabrikationstechnischen Gründen besonders vorteilhaft, sondern ergibt auch mechanisch gute Resultate, z.B. bei einer Biegebeanspruchung der Steckverbindung.

Umgekehrt können bei einem Verbindergegenstück die Bohrungen das Kabelendstück bis zur Stirnseite durchdringen und die Führungsstifte können über die Stirnseite hinaus verlängert sein, wobei die über die Stirnseite hinausragenden Abschnitte der Führungsstifte das Passmittel zum Eindringen in die komplementären Bohrungen eines Verbindergegenstücks bilden. Hier sind es nicht die Bohrungen, sondern die Führungsstifte, welche eine Doppelfunktion übernehmen, indem sie einerseits das Kabelendstück relativ zum Sockelstück geradlinig führen und anderseits den Steckverbinder mit seiner Stirnseite passgenau auf ein Gegenstück zentrieren. Es wäre aber selbstverständlich denkbar, in den gleichen Bohrungen koaxial getrennte Führungsstifte und Passstifte anzuordnen, wobei in einem derartigen Fall die Passstifte relativ zum Kabelendstück fixiert werden müssten.

Um eine besonders präzise Führung im stirnseitigen Bereich zu gewährleisten, kann das Kabelendstück an der Stirnseite eine aufgesetzte Abschlussplatte aufweisen, die aus einem härteren Werkstoff besteht als das übrige Kabelendstück. Ausserdem können die Bohrungen im Bereich der Abschlussplatte relativ zu den Führungsstiften bzw. Passstiften engere Passtoleranzen aufweisen, als im Bereich des übrigen Kabelendstücks. So kann beispielsweise das übrige Kabelendstück ein relativ einfaches Teil aus Spritzgussmaterial sein, wobei im Kontaktbereich der Lichtwellenleiter trotzdem höchste Präzision erzielt wird, wenn die Abschlussplatte beispielsweise aus einem oxidkeramischen Werkstoff besteht und wenn die entsprechenden Bohrungen mit kleinstmöglichen Masstoleranzen angeordnet sind.

Weitere Vorteile und Einzelmerkmale der Erfindung ergeben sich aus der nachfolgenden Beschreibung eines Ausführungsbeispiels und aus den Zeichnungen. Es zeigen:
- Figur 1: eine perspektivische Darstellung der Einzelteile eines ersten Steckverbinders,
- Figur 2: der Steckverbinder gemäss Figur 1 im zusammengebauten Zustand,
- Figur 3: eine perspektivische Darstellung der Einzelteile eines zweiten Steckverbinders,
- Figur 4: der Steckverbinder gemäss Figur 3 im zusammengebauten Zustand,
- Figur 5: die Stirnseiten des ersten und des zweiten Steckverbinders in stark vergrösserter Darstellung,
- Figur 6: eine perspektivische Darstellung einer rückwandseitigen ersten und einer baugruppenseitigen zweiten Steckverbinderaufnahme für eine Einschub-Steckverbindung,
- Figur 7: ein vertikaler Querschnitt durch die rückwandseitige Steckverbinderaufnahme,
- Figur 8: ein horizontaler Querschnitt durch die rückwandseitige Steckverbinderaufnahme,
- Figur 9: ein vertikaler Querschnitt durch die baugruppenseitige Steckverbinderaufnahme,
- Figur 10: ein horizontaler Querschnitt durch die baugruppenseitige Steckverbinderaufnahme,
- Figur 11: eine perspektivische Darstellung der beiden Steckverbinderaufnahmen mit eingerasteten Verbindern,
- Figur 12: die Einschub-Steckverbindung gemäss Figur 11 im eingesteckten Zustand,
- Figur 13: ein vertikaler Querschnitt durch die Steckverbindung gemäss Figur 12 und
- Figur 14: ein horizontaler Querschnitt durch die Steckverbindung gemäss Figur 12.

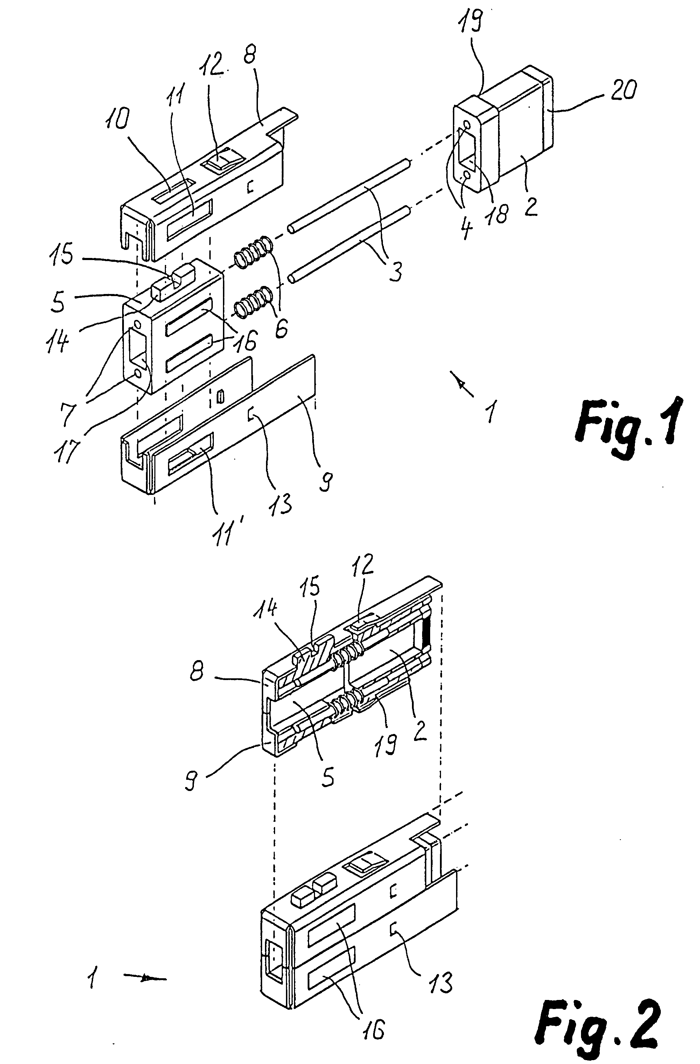

Anhand der Figuren 1 bis 4 wird zunächst der Aufbau der beiden Steckverbinder eines Verbinderpaars mit komplementären Passmitteln beschrieben. Die Figuren 1 und 2 zeigen dabei einen ersten Steckverbinder 1, der beispielsweise bei einer Einschub-Steckverbindung der rückwandseitigen Komponente zugeordnet ist. Der Steckverbinder besteht im wesentlichen aus einem Kabelendstück 2, in dem zwei sich über die gesamte Länge erstreckende parallele Bohrungen 4 angeordnet sind. Diese Bohrungen dienen dazu, das Kabelendstück 2 relativ zu einem Sockelstück 5 verschiebbar zu lagern. Das Sockelstück ist ebenfalls mit zwei Bohrungen 7 versehen, in denen zwei Führungsstifte 3 beispielsweise durch Einkleben fest verankert werden. Die Führungsstifte dringen teilweise in die Bohrungen 4 des Kabelendstücks ein und zwar mit einer Passung, die eine präzise Führung, jedoch eine leichtgängige Verschiebung erlaubt. Zwischen dem Sockelstück 5 und dem Kabelendstück 2 sitzt auf jedem Führungsstift 3 je eine Schraubendruckfeder 6, so dass das Kabelendstück 2 vom Sokelstück weggespannt wird. Sowohl im Sockelstück 5, als auch im Kabelendstück 2 ist zwischen den beiden jeweiligen Bohrungen je eine Kabelöffnung 17 bzw. 18 angeordnet, die das Einziehen eines Lichtwellenleiterwandkabels ermöglicht.

Die aus Sockelstück und Kabelendstück bestehende Einheit ist in einem Gehäuse eingeschlossen, das aus einem Gehäuseoberteil 8 und einem Gehäuseunterteil 9 besteht. Diese beiden Gehäuseteile können auf das Sockelstück 5 geschnappt werden, wobei Seitenleisten 16 am Sockelstück in korrespondierende seitliche Gehäuseöffnungen 11 und 11' an den Gehäuseteilen einrasten.

Am Gehäuseoberteil 8 ist eine obere Gehäuseöffnung 10 angeordnet. Aus dieser Gehäuseöffnung ragt ein auf dem Sockelstück 5 sitzender quaderförmiger Anschlag 14, der mit einem Querschlitz 15 versehen ist. Dieser Anschlag dient dazu, den Steckverbinder in einer Steckverbinderaufnahme zu fixieren, wie nachstehend noch beschrieben wird. Als weiteres Element zur Fixierung des Verbinders ist sowohl am Gehäuseoberteil 8 als auch am Gehäuseunterteil 9 je ein Rastelement 12 angeordnet, das als federnde und aus der Ebene der Gehäusewand herausgebogene Zunge ausgebildet ist. Schliesslich weisen die beiden Gehäuseteile auch noch seitlich Einbiegungen 13 auf, die als Anschlag für das Kabelendstück 2 dienen. Die Einbiegungen wirken dabei mit einer umlaufenden Schulter 19 am Kabelendstück zusammen. Die Gehäuseteile können Blechbiegeteile sein, während das Sockelstück und das Kabelendstück als Kunststoffspritzgussteile ausgebildet sein können. An der Stirnseite des Kabelendstücks ist eine Abschlussplatte 20 aus einem besonders harten Werkstoff, beispielsweise aus einem oxidkeramischen Material aufgesetzt.

Wie insbesondere aus Figur 2 ersichtlich ist, treffen die Seitenwände des Gehäuseoberteils und des Gehäuseunterteils in der gleichen Ebene aufeinander, so dass eine sehr schlanke Bauweise erreicht wird. Die Montage sämtlicher Bauteile erfolgt ohne Schraubverbindungen oder dergleichen lediglich durch Zusammenstecken bzw. Zusammenschnappen.

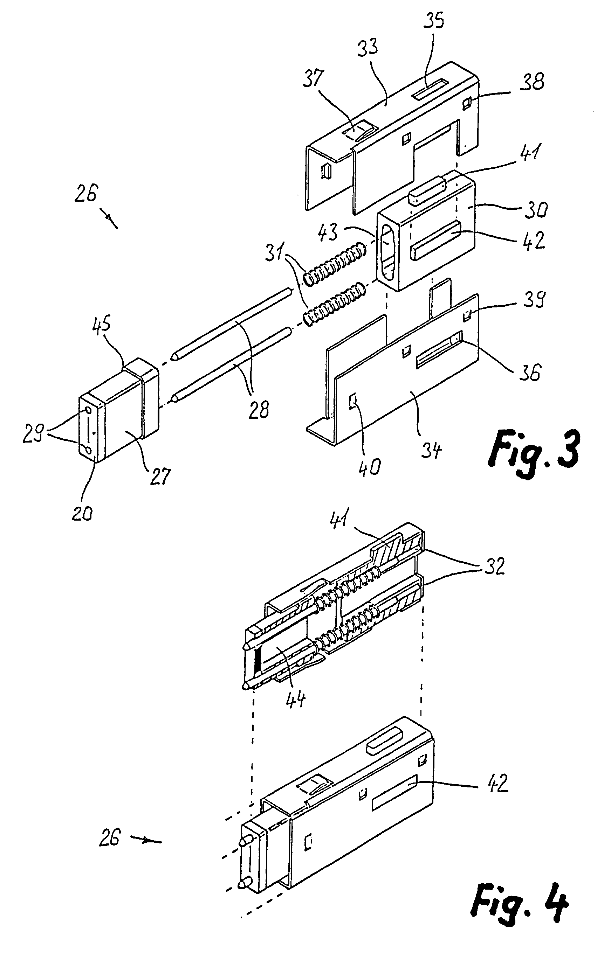

Ein als Gegenstück dienender zweiter Steckverbinder 26 ist in den Figuren 3 und 4 dargestellt, wobei das Grundprinzip der Konstruktion gleich oder ähnlich ist wie beim Steckverbinder gemäss den Figuren 1 und 2. Vorgesehen ist ebenfalls ein Kabelendstück 27, das mittels Führungsstiften 28 relativ zu einem Sockelstück 30 verschiebbar und federnd gelagert ist. Zu diesem Zweck sind im Kabelendstück und im Sockelstück ebenfalls parallele Bohrungen 29 und 32 angeordnet, wobei die Führungsstifte 28 fest in den Bohrungen 32 verankert werden. Zur Erzeugung einer Federvorspannung dienen die beiden Schraubendruckfedern 31, die jedoch wegen der hier gewünschten veränderten Federcharakteristik etwas länger ausgebildet sind, als die Druckfedern 6 am Steckverbinder 1.

Anders als die Führungsstifte 3 beim Steckverbinder 1 sind die Führungsstifte 28 am Steckverbinder 26 derart lang ausgebildet, dass sie sich über die Stirnseite des Kabelendstücks 27 hinaus erstrecken. Die hinausragenden Abschnitte bilden dabei gleichzeitig das Passmittel in der Form von Passstiften, welche in die stirnseitigen Abschnitte der Bohrungen 4 am Kabelendstück 2 des Steckverbinders 1 eindringen können. So wie die Bohrungen 4 übernehmen somit auch die Führungs- und Passstifte 28 eine Doppelfunktion, da sie gleichzeitig der Führung des jeweiligen Kabelendstücks und der Passung des jeweiligen Verbindergegenstücks dienen.

Auch am Steckverbinder 26 ist ein Gehäuse vorgesehen, das durch ein Gehäuseoberteil 33 und ein Gehäuseunterteil 34 gebildet wird. Im Gegensatz zu den Gehäuseteilen 8 und 9 beim Steckverbinder 1 halten die Gehäuseteile 33 und 34 jedoch gegenseitig zusammen, wozu Rastöffnungen 38 und Rastnocken 39 vorgesehen sind. Die Längsseitenwände überlappen sich dabei, so dass die Rastnocken 39 am Gehäuseunterteil 34 in die Rastöffnungen 38 am Gehäuseoberteil 33 einrasten können. Das Sockelstück 30 ist jedoch ebenfalls im Gehäuse fest verankert. Zu diesem Zweck ist seitlich je eine Seitenleiste 42 angeordnet, welche in eine seitliche Gehäuseöffnung 36 einrastet.

Aehnlich wie am Sockelstück 5 ist auch hier ein quaderförmiger Anschlag 41 vorgesehen, der durch eine obere Gehäuseöffnung 35 hinausragt. Federnde Rastelemente 37 sind ebenfalls ähnlich ausgebildet wie beim Steckverbinder 1. Gleiches gilt auch für die als Anschläge dienenden Einbiegungen 40, die mit einer umlaufenden Schulter 45 am Kabelendstück 27 zusammenwirken. Schliesslich sind auch hier am Sockelstück und am Kabelendstück zwischen den jeweiligen Bohrungen Kabelöffnungen 43 und 44 zum Einziehen eines Bandkabels vorgesehen.

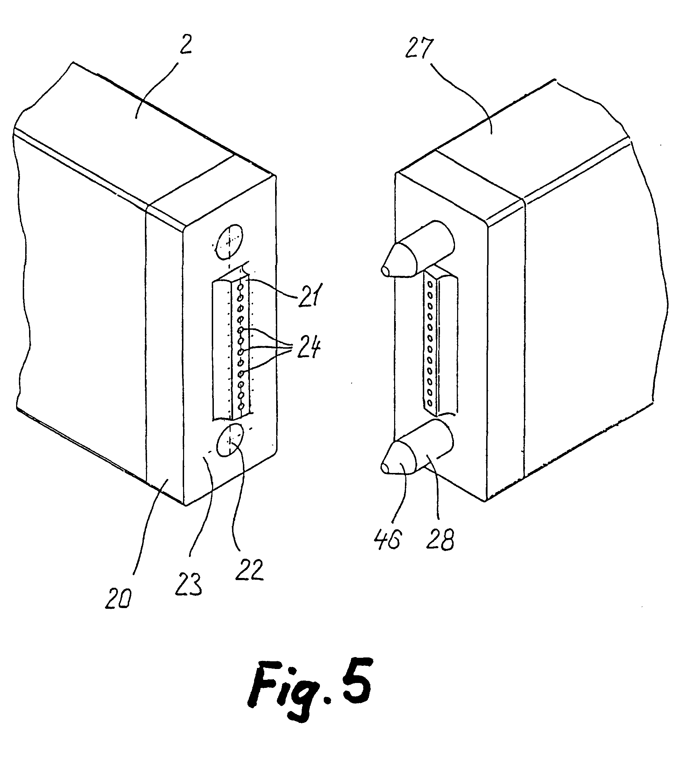

Figur 5 zeigt perspektivisch und einander zugewandt die Stirnseiten 23 der beiden Kabelendstücke 2 und 27. Diese Stirnseiten werden, wie bereits kurz erwähnt, durch eine Abschlussplatte 20 gebildet, die für beide Kabelendstücke die gleiche Konfiguration aufweist. Die Bohrungen in den Kabelendstücken setzen sich dabei in der Abschlussplatte 20 als wesentlich präziser bearbeitete Passbohrungen 22 fort. Auf der Achse zwischen den beiden Zentren dieser Passbohrungen ist eine Reihe von Bohrungen 24 angeordnet, welche die Enden der Lichtwellenleiter aufnehmen. Die Bohrungen 24 sind dabei in einem Kupplungsabschnitt 21 angeordnet, der eine über die Stirnseite 23 hinausragende Leiste bildet. Im zusammengesteckten Zustand liegen dabei die Oberflächen der Kupplungsabschnitte aufeinander, wobei diese zur Erzielung einer erhöhten Rückflussdämpfung noch angeschrägt und/oder konvex gewölbt sein können. Zur Erleichterung des Einsteckvorgangs sind die Führungs- und Passstifte 28 endseitig mit einem Konus 46 versehen. Auch die Führungs- und Passstifte sind selbstverständlich aus einem besonders harten und verschleissfesten Material gefertigt und sie sind wie die Passbohrungen 22 hochpräzise bearbeitet. Beim Einstecken dringen die Passstifte 28 in die Passbohrungen 22 des Verbindergegenstücks und unter der Einwirkung der Einsteckkraft können die Kabelendstücke 2 und 27 geringfügig zurückweichen, so dass die Kupplungsabschnitte 21 und damit natürlich auch die Stirnseiten der Lichtwellenleiter unter Federvorspannung gegeneinander gepresst werden.

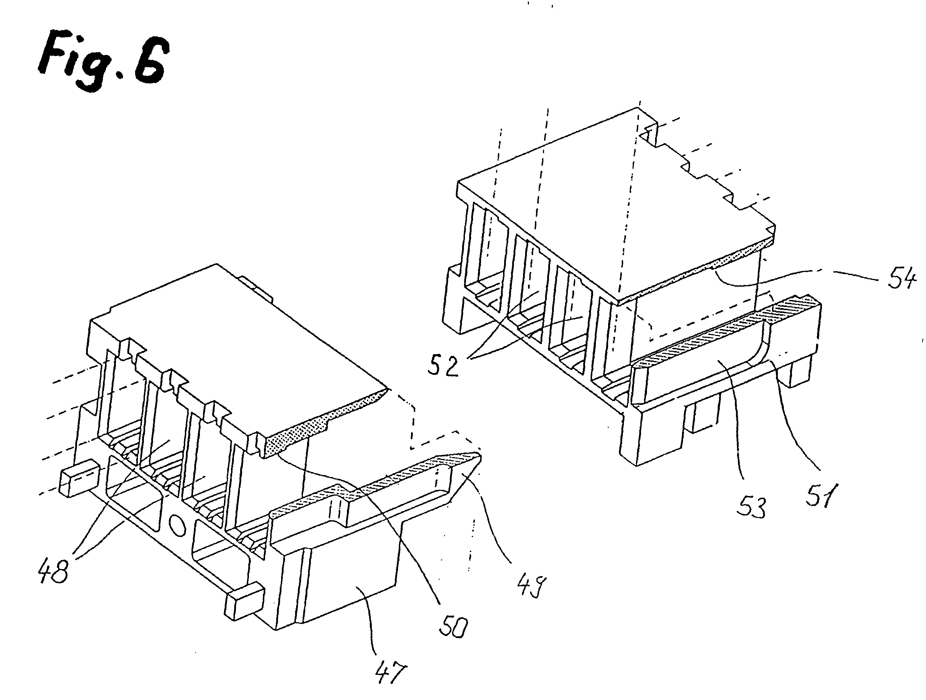

Figur 6 zeigt zunächst je eine rückwandseitige erste Steckverbinderaufnahme 47 und eine baugruppenseitige zweite Steckverbinderaufnahme 51 für die Aufnahme von insgesamt vier Verbinderpaaren. Die rückwandseitige Steckverbinderaufnahme 47 könnte beispielsweise an der Rückwand eines Geräts befestigt sein und die baugruppenseitige Steckverbinderaufnahme 51 könnte auf einer Platine mit elektronischen Bauteilen befestigt sein, welche in das genannte Gerät eingeschoben werden kann. Für die Aufnahme der einzelnen Steckverbinder sind Einzelabteile 48 und 52 vorgesehen. Zur Fixierung der Steckverbinder dient jeweils ein Haltekragen 50 bzw. 54. Zur Erleichterung des Einschubvorgangs sind an der Steckverbinderaufnahme 47 seitliche Führungsflügel 49 angeordnet. Diese greifen in seitliche Führungsnuten 53 an der Steckverbinderaufnahme 51. Endseitig sind die Führungsflügel 49 derart in der Materialstärke konisch verjüngt, dass beim Kontakt mit den Führungsnuten 53 zunächst eine Grobzentrierung stattfindet.

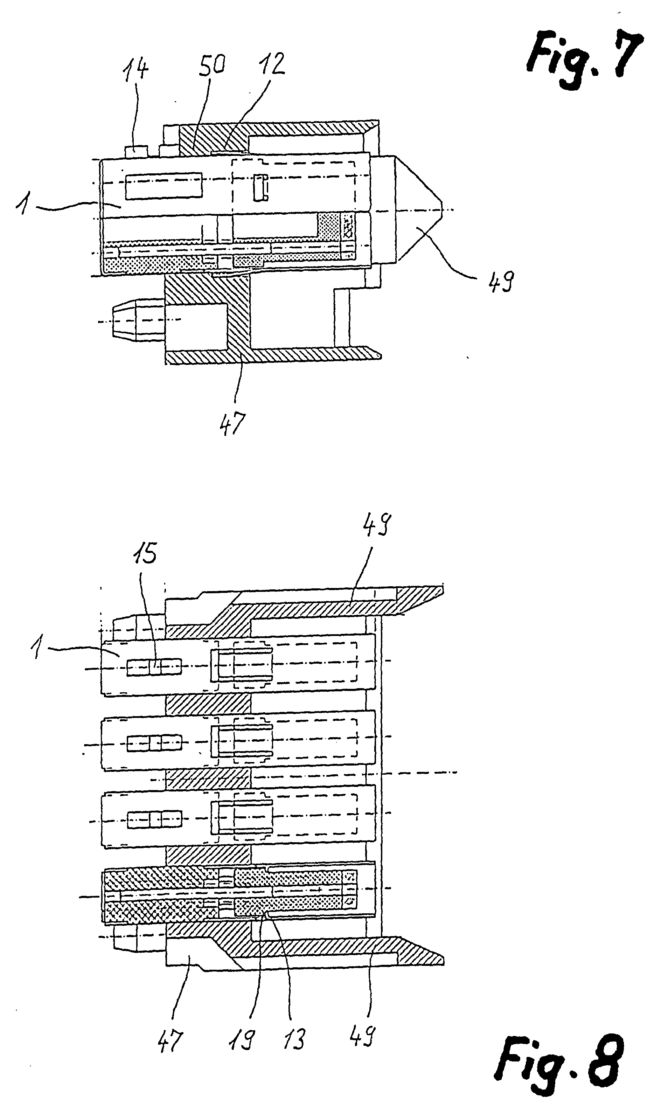

Die Figuren 7 und 8 zeigen die Steckverbinderaufnahme 47 mit den eingerasteten Steckverbindern 1. Die Steckverbinder sind dabei so weit in die Einzelabteile 48 eingeschoben, bis der Anschlag 14 am Haltekragen 50 ansteht. In dieser Position rasten die Rastelemente 12 hinter den Haltekragen ein. Zum Lösen eines einzelnen Steckers müssen die Rastelemente 12 mit einem Schraubenzieher oder einem anderen geeigneten Werkzeug in die Ebene der Gehäusewand eingedrückt werden, so dass der Steckverbinder wieder zurückgezogen werden kann. Der Querschnitt 15 erleichtert dabei die Rückzugsbewegung, indem dort beispielsweise ein Schraubenzieher angesetzt werden kann.

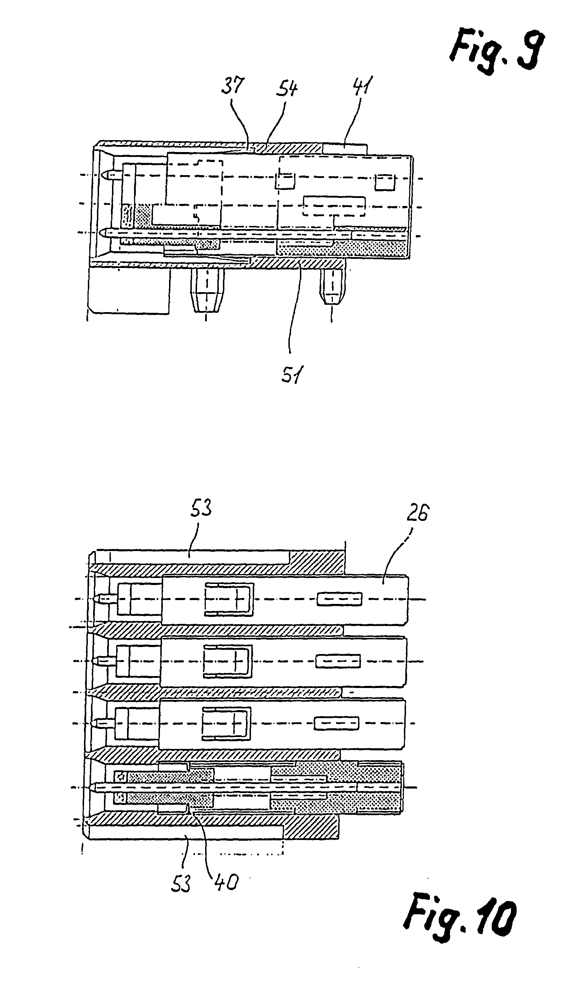

Auf ähnliche Weise zeigen die Figuren 9 und 10 die Steckverbinderaufnahme 51 mit den eingerasteten Steckverbindern 26. Auch hier stehen die Anschläge 41 am Haltekragen 54 an und die Rastelemente 37 rasten hinter dem Haltekragen ein. Die Position der Steckverbinder innerhalb der Steckverbinderaufnahme ist dabei derart, dass die Führungs- und Passstifte 28 nicht über die Stirnseite der Verbinderaufnahme hinausragen.

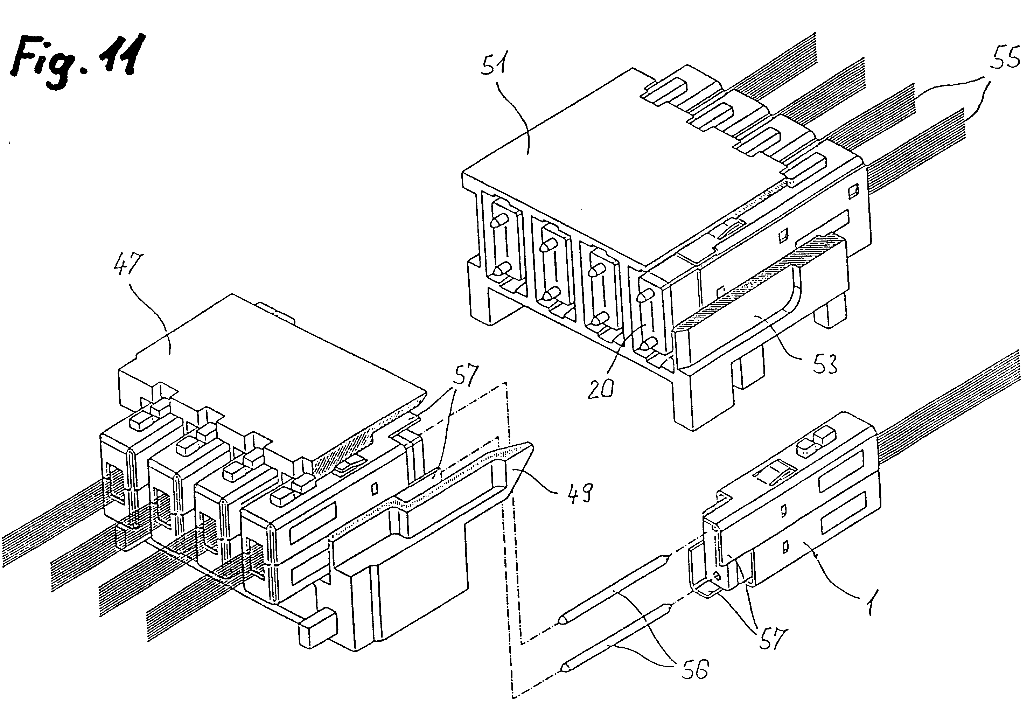

Figur 11 zeigt die einander gegenüberstehenden bestückten Steckverbinderaufnahmen 47 und 51. Als Besonderheit ist hier noch dargestellt, wie ein der rückwandseitigen Steckverbinderaufnahme 47 zugeordneter Steckverbinder 1 mit einem Steckverbinder der gleichen Gattung gekoppelt werden kann. Dies kann beispielsweise zu Messzwecken erforderlich sein. Da die Steckverbinder 1 nicht mit über die Stirnseite hinausragenden Passstiften versehen sind, werden separate Adapterstifte 56 eingesetzt, um den passgenauen Anschluss des Steckers zu ermöglichen. Die diagonal angeordneten Gehäusevorsprünge 57 sorgen dafür, dass keine seitenverkehrte Ankoppelung möglich ist. In Figur 11 sind auch die einzelnen Lichtwellenleiterbandkabel 55 dargestellt, die in den vorhergehenden Figuren der besseren Uebersichtlichkeit halber weggelassen wurden. Die Bandkabel sind selbstverständlich mit einer geeigneten Zugentlastung in den Steckverbindern gehalten und die einzelnen Lichtwellenleiter sind auf geeignete Weise in den Abschlussplatten 20 fixiert.

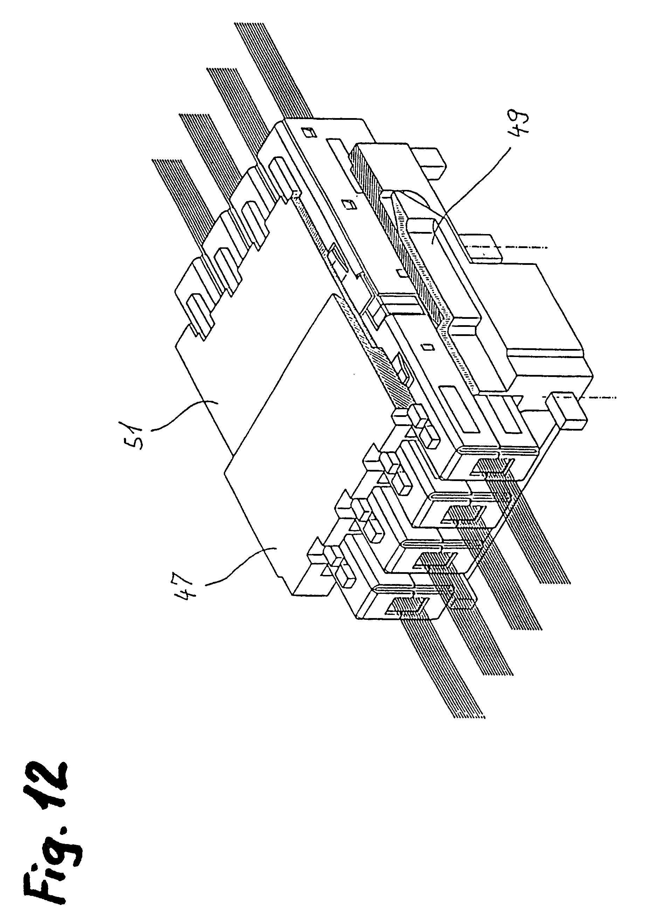

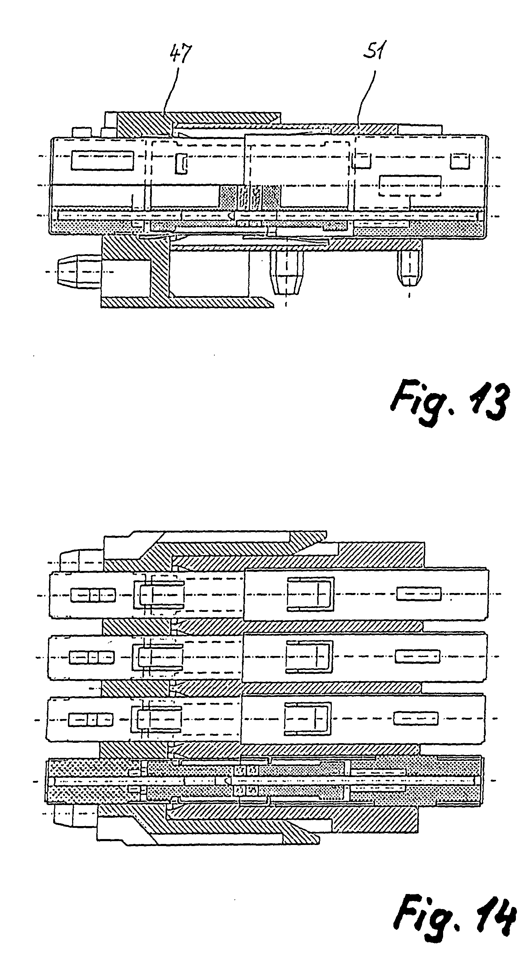

Figur 12 zeigt die Einschub-Steckverbindung im eingesteckten Zustand, wobei jeweils weitere Wandabschnitte der beiden Steckverbinderaufnahmen 47 und 51 der Führung und Positionierung dienen. Dies kommt beispielsweise auch noch in den Figuren 13 und 14 zum Ausdruck. Die Einschub-Steckverbindung hat eine sehr hohe Packungsdichte und die Stirnseiten der Steckverbinder werden mit grosser Präzision und konstanter Federkraft gegeneinander gepresst.

## Patentansprüche

1. Vorrichtung für die paarweise Verbindung von Lichtwellenleiterkabeln mit einer Mehrzahl von parallel angeordneten Lichtwellenleitern, mit einer ersten Steckverbinderaufnahme (47), einer zweiten Steckverbinderaufnahme (51) und mit jeweils pro Steckverbinderaufnahme einer Mehrzahl von optischen Steckverbindern (1, 26), bei denen die Enden der Lichtwellenleiter eines Lichtwellenleiterkabels an der Stirnseite eines Kabelendstücks (2, 27) gehalten sind, wobei die beiden Steckverbinderaufnahmen (47, 51) mit Führungselementen (49, 53) zum gegenseitigen Ausrichten von Steckverbinderpaaren (1, 26) versehen sind, **dadurch gekennzeichnet, dass** jeder Steckverbinder ein Gehäuse (8, 9; 33, 34) aufweist, in dem das Kabelendstück (2, 27) unter Federvorspannung gehalten ist und dass jede der beiden Steckverbinder aufnahmen so ausgestaltet ist, dass jeder Steckverbinder am Gehäuse lösbar in seine Steckverbinderaufnahme eingerastet ist.

2. Vorrichtung nach Anspruch 1, **dadurch gekennzeichnet, dass** an jedem Gehäuse (8, 9; 33, 34) wenigstens ein federndes, gegen die Ebene der Gehäusewand pressbares Rastelement (12, 37) angeordnet ist und dass die Steckverbinder (1, 26) an den Steckverbinderaufnahmen zwischen einem über die Gehäusewand hinausragenden Anschlag (14, 41) und dem Rastelement (12, 37) einrastbar sind.

3. Vorrichtung nach Anspruch 2, **dadurch gekennzeichnet, dass** in jedem Gehäuse ein als Widerlager für das gefederte Kabelendstück dienendes Sockelstück (5, 30) fest eingespannt ist, welches den durch eine Gehäuseöffnung (10, 35) ragenden Anschlag (14, 41) trägt.

4. Vorrichtung nach einem der Ansprüche 1 bis 3, **dadurch gekennzeichnet, dass** die Führungselemente an der ersten Steckverbinderaufnahme (47) ein Paar seitliche Führungsflügel (49) aufweisen, welche in korrespondierende Führungsnuten (53) an der zweite Steckverbinderaufnahme (51) eingreifen.

5. Vorrichtung nach einem der Ansprüche 1 bis 4, **dadurch gekennzeichnet, dass** jede Steckverbinderaufnahme (47, 51) mehrere Einzelabteile (48, 52) aufweist und dass in jedem Einzelabteil ein Steckverbinder einrastbar ist.

6. Vorrichtung nach einem der Ansprüche 1 bis 5, **dadurch gekennzeichnet, dass** das Kabelendstück (2, 27) an zwei Führungsstiften (3, 28) geführt ist, welche in einem Sockelstück (5, 30) gehalten sind und welche in korrespondierende Bohrungen (4, 29) im Kabelendstück eingreifen und dass zwischen dem Sockelstück und dem Kabelendstück wenigstens eine Druckfeder (6, 31) derart angeordnet ist, dass das Kabelendstück unter Federvorspannung gegen das Sockelstück verschiebbar ist.

7. Vorrichtung nach Anspruch 6, **dadurch gekennzeichnet, dass** zwischen dem Sockelstück (5, 30) und dem Kabelendstück (2, 27) auf jedem Führungsstift (3, 28) je eine Schraubendruckfeder (6, 31) gehalten ist.

8. Vorrichtung nach Anspruch 6 oder 7, **dadurch gekennzeichnet, dass** das Sockelstück und das Kabelendstück im Gehäuse (8, 9; 33, 34) gehalten sind, wobei das Gehäuse einen Anschlag (13, 40) bildet, gegen den das Kabelendstück unter Federvorspannung gepresst wird.

9. Vorrichtung nach einem der Ansprüche 6 bis 8, **dadurch gekennzeichnet, dass** das Gehäuse aus zwei Gehäuseschalen (8, 9; 33, 34) besteht, welche über das Sockelstück bzw. über das Kabelendstück schnappbar sind.

10. Vorrichtung nach einem der Ansprüche 6 bis 9, **dadurch gekennzeichnet, dass** die Bohrungen (4) das Kabelendstück (2) bis zur Stirnseite durchdringen und dass die Führungsstifte (3) nur einen Teil der Länge der Bohrungen beanspruchen, wobei die im Bereich der Stirnseite verbleibenden freien Abschnitte der Bohrungen das Passmittel zur Aufnahme komplementärer Passstifte eines Verbindergegenstücks bilden.

11. Vorrichtung nach einem der Ansprüche 6 bis 9, **dadurch gekennzeichnet, dass** die Bohrungen (29) das Kabelendstück (27) bis zur Stirnseite durchdringen und dass die Führungsstifte (28) über die Stirnseite hinaus verlängert sind, wobei die über die Stirnseite hinausragenden Abschnitte der Führungsstifte das Passmittel zum Eindringen in die komplementären Bohrungen eines Verbindergegenstücks bilden.

12. Vorrichtung nach Anspruch 10 oder 11, **dadurch gekennzeichnet, dass** das Kabelendstück an der Stirnseite eine aufgesetzte Abschlussplatte aufweist, die aus einem härteren Werkstoff besteht als das übrige Kabelendstück und dass die Bohrungen im Bereich der Abschlussplatte relativ zu den Führungsstiften engere Passtoleranzen aufweisen, als im Bereich des übrigen Kabelendstücks.

## Claims

1. Device for the pairwise connection of optical-fibre cables comprising a plurality of parallel optical fibres, having a first plug-in connector receptacle (47), a second plug-in connector receptacle (51) and for each respective plug-in connector receptacle a plurality of optical plug-in connectors (1, 26) whereon the ends of the optical fibres of an optical-fibre cable are held on the front end face of a cable end cover (2, 27), the two plug-in connector receptacles (47, 51) being provided with guide elements (49, 53) for the mutual alignment of pairs of plug-in connectors (1, 26),
**characterised in that** each plug-in connector has a casing (8, 9; 33, 34) in which the cable end cover (2, 27) is held resiliently pretensioned and that each of the two plug-in connector receptacles is so configured that on the enclosure each plug-in connector is releasably latched into its plug-in connector receptacle.

2. Device according to claim 1, **characterised in that** arranged on each casing (8, 9; 33, 34) there is at least one resilient catch (12, 37) which can be pressed against the plane of the enclosure wall, and that at the plug-in connector receptacles the plug-in connectors (1, 26) are adapted to latch between a limit stop (14, 41), which juts out beyond the enclosure wall, and the catch (12, 37).

3. Device according to claim 2, **characterised in that** permanently clamped in each casing is a base element (5, 30) which acts as an abutment for the resilient cable end cover and carries the limit stop (14, 41) which projects through an opening (10, 35) in the casing.

4. Device according to any of claims 1 to 3, **characterised in that** the guide elements on the first plug-in connector receptacle (47) incorporate a pair of lateral guide wings (49) which engage in corresponding guide slots (53) on the second plug-in connector receptacle (51).

5. Device according to any of claims 1 to 4, **characterised in that** each plug-in connector receptacle (47, 51) has a plurality of individual compartments (48, 52) and that a plug-in connector can be latched in each individual compartment.

6. Device according to any of claims 1 to 5, **characterised in that** the cable end cover (2, 27) is set on two guide pins (3, 28) which are retained in a base element (5, 30) and which engage in corresponding bores (4, 29) in the cable end cover, and that between the base element and the cable end cover there is at least one compression spring (6, 31) arranged in such a way that the cable end cover can be displaced, resiliently pretensioned, towards the base element.

7. Device according to claim 6, **characterised in that** a respective helical compression spring (6, 31) is held on each guide pin (3, 28), between the base element (5, 30) and the cable end cover (2, 27).

8. Device according to claim 6 or 7, **characterised in that** the base element and the cable end cover are held in the casing (8, 9; 33, 34), the casing forming a limit stop (13, 40) against which the cable end cover, resiliently pretensioned, is pressed.

9. Device according to any of claims 6 to 8, **characterised in that** the casing consists of two casing shells (8, 9; 33, 34) which can be snapped over the base element and the cable end cover, respectively.

10. Device according to any of claims 6 to 9, **characterised in that** the bores (4) penetrate the cable end cover (2) as far as the front end face and that the guide pins (3) occupy only part of the length of the bores, the free portions of the bores that remain in the vicinity of the front end face forming the locating means for receiving complementary locating pins of a mating connector element.

11. Device according to any of claims 6 to 9, **characterised in that** the bores (29) penetrate the cable end cover (27) as far as the front end face and that the guide pins (28) are extended beyond the front end face, the portions of the guide pins that jut out beyond the front end face forming the locating means for penetrating into the complementary bores of a mating connector element.

12. Device according to claim 10 or 11, **characterised in that** placed onto che front end face the cable end cover has a terminal plate consisting of a harder material than the rest of the cable end cover, and that in the vicinity of the terminal plate the bores have narrower fitting tolerances with respect to the guide pins than in the vicinity of the rest of the cable end cover.

## Revendications

1. Dispositif pour relier par paires des câbles à fibres optiques comportant plusieurs fibres optiques parallèles, avec une première alvéole de connecteur (47), une seconde alvéole de connecteur (51) et, pour chaque alvéole de connecteur, plusieurs connecteurs optiques (1, 26) au niveau desquels les extrémités des fibres optiques d'un câble sont fixées au côté frontal d'un élément d'extrémité de câble (2, 27), lés deux alvéoles de connecteur (47, 51) étant pourvus d'éléments de guidage (49, 53) pour l'alignement mutuel de paires de connecteurs (1, 26), **caractérisé en ce que** chaque connecteur comporte un boîtier (8, 9 ; 33, 34) dans lequel l'élément d'extrémité de câble (2, 27) est maintenu avec une contrainte de ressort, et **en ce que** chacune des deux alvéoles de connecteur est conçue pour que chaque connecteur soit encliqueté de manière amovible, au niveau de son boîtier, dans son alvéole.

2. Dispositif selon la revendication 1, **caractérisé en ce qu'**il est prévu sur chaque boîtier (8, 9 ; 33, 34) au moins un élément d'encliquetage à ressort (12, 37) apte à être pressé vers le plan de la paroi de boîtier, et **en ce que** les connecteurs (1, 26) sont aptes à s'encliqueter au niveau des alvéoles de connecteurs entre une butée (14, 41) qui dépasse de la paroi de boîtier, et l'élément d'encliquetage (12, 37).

3. Dispositif selon la revendication 2, **caractérisé en ce qu'**il est prévu, serré dans chaque boîtier, un élément formant socle (5, 30) qui sert de butée pour l'élément d'extrémité de câble à ressort, et qui porte la butée (14, 41) dépassant de l'ouverture de boîtier (10, 35).

4. Dispositif selon l'une des revendications 1 à 3, **caractérisé en ce que** les éléments de guidage prévus sur la première alvéole de connecteur (47) comportent deux ailes de guidage (49) qui pénètrent dans des rainures de guidage correspondantes (53) prévues sur la seconde alvéole de connecteur (51).

5. Dispositif selon l'une des revendications 1 à 4, **caractérisé en ce que** chaque alvéole de connecteur (47, 51) comporte plusieurs compartiments individuels (48, 52), et **en ce qu'**un connecteur est apte à être encliqueté dans chaque compartiment individuel.

6. Dispositif selon l'une des revendications 1 à 5, **caractérisé en ce que** l'élément d'extrémité de câble (2, 27) est guidé au niveau de deux tiges de guidage (3, 28) qui sont fixées dans un élément formant socle (5, 30) et qui pénètrent dans des perçages correspondants (4, 29) de l'élément d'extrémité de câble, et **en ce qu'**il est prévu entre l'élément formant socle et l'élément d'extrémité de câble au moins un ressort de compression (6, 31) qui est disposé de telle sorte que l'élément d'extrémité de câble, soumis à une contrainte de ressort, soit apte à être déplacé vers ledit élément formant socle.

7. Dispositif selon la revendication 6, **caractérisé en ce qu'**un ressort à boudin (6, 31) est logé entre l'élément formant socle (5, 30) et l'élément d'extrémité de câble (2, 27), sur chaque tige de guidage (3, 28).

8. Dispositif selon la revendication 6 ou 7, **caractérisé en ce que** l'élément formant socle et l'élément d'extrémité de câble sont fixés dans le boîtier (8, 9 ; 33, 34), le boîtier formant une butée (13, 40) contre laquelle l'élément d'extrémité de câble est pressé en étant soumis à une contrainte de ressort.

9. Dispositif selon l'une des revendications 6 à 8, **caractérisé en ce que** le boîtier se compose de deux coques de boîtier (8, 9 ; 33, 34) qui sont aptes à s'enclencher sur l'élément formant socle et sur l'élément d'extrémité de câble.

10. Dispositif selon l'une des revendications 6 à 9, **caractérisé en ce que** les perçages (4) traversent l'élément d'extrémité de câble (2) jusqu'au côté frontal, et **en ce que** les tiges de guidage (3) n'occupent qu'une partie de la longueur des perçages, les sections de perçages libres restantes, dans la zone du côté frontal, formant le moyen d'ajustement pour recevoir des tiges d'ajustement complémentaires d'un élément de connecteur opposé.

11. Dispositif selon l'une des revendications 6 à 9, **caractérisé en ce que** les perçages (29) traversent l'élément d'extrémité de câble (27) jusqu'au côté frontal, et **en ce que** les tiges de guidage (28) dépassent du côté frontal, les sections des tiges de guidage qui dépassent du côté frontal formant le moyen d'ajustement pour pénétrer dans les perçages complémentaires d'un élément de connecteur opposé.

12. Dispositif selon la revendication 10 ou 11, **caractérisé en ce que** l'élément d'extrémité de câble présente, sur le côté frontal, une plaque terminale posée qui se compose d'un matériau plus dur que le reste de l'élément d'extrémité de câble, et **en ce que** dans la zone de cette plaque, les perçages présentent par rapport aux tiges de guidage des tolérances d'ajustement plus étroites que dans la zone du reste de l'élément d'extrémité de câble.
